# EUROPEAN PATENT APPLICATION

(11) **EP 4 733 737 A1**
(43) Date of publication of application: **29.04.2026**
(21) Application number: 24208938.1
(22) Date of filing: 25.10.2024
(51) Int. Cl.: G01N 1/28

(54) **CONTROLLER FOR A LASER MICRODISSECTION SYSTEM, LASER MICRODISSECTION SYSTEM, AND METHOD FOR LASER MICRODISSECTION**

(71) Applicant: Leica Microsystems CMS GmbH, 35578 Wetzlar (DE)
(72) Inventor: Schlaudraff, Falk, 35578 Wetzlar (DE); Greb, Christoph, 35578 Wetzlar (DE); Hoffmann, Florian, 35578 Wetzlar (DE)
(74) Representative: Schaumburg und Partner Patentanwälte mbB

(57) **Abstract**

A controller (142) for a laser microdissection system (100) is configured to receive a user input corresponding to first settings for the laser microdissection system (100) used with a first objective lens (114a), to generate second settings for the laser microdissection system (100) used with a second objective lens (114b) based on the first settings, and to configure the laser micro dissection system (100) based on the second settings. At least one characteristic of a first laser beam generated according to the first settings by the laser microdissection system (100) using the first objective lens (114a) is the same for a second laser beam generated according to the second settings by the laser microdissection system (100) using the second objective lens (114b). The at least one characteristic is influenced by the first objective lens (114a) when the laser microdissection system (100) is used with the first objective lens (114a) and influenced by the second objective lens (114b) when the laser microdissection system (100) is used with the second objective lens (114b).

## Description

### Technical field

The invention relates to a controller for a laser microdissection system, and to a laser microdissection system. The invention further relates to a method for laser microdissection.

### Background

A laser microdissection system uses a laser beam to separate a small portion, called a dissectate, from a specimen. The specimen may be a thin tissue section, for example, and the dissectate may comprise specific cells, cell clusters, or other microscopic regions of interest. To remove the dissectate, the specimen may be cut using the laser beam or the laser beam may be used to tear the dissectate from the specimen using radiation pressure. Some laser microdissection systems may be configurable, to adjust the laser beam to a specific specimen, for example.

### Summary

It is an object to provide a controller for a laser microdissection system, a laser microdissection system, and a method for laser microdissection, which improve upon known systems and methods.

The aforementioned object is achieved by the subject-matter of the independent claims. Further embodiments are defined in the dependent claims and the following description.

The proposed controller for a laser microdissection system is configured to receive a user input corresponding to first settings for the laser microdissection system used with a first objective lens, to generate second settings for the laser microdissection system used with a second objective lens based on the first settings, and to configure the laser micro dissection system based on the second settings. At least one characteristic of a first laser beam generated according to the first settings by the laser microdissection system using the first objective lens is the same for a second laser beam generated according to the second settings by the laser microdissection system using the second objective lens. The at least one characteristic is influenced by the first objective lens when the laser microdissection system is used with the first objective lens and influenced by the second objective lens when the laser microdissection system is used with the second objective lens.

By configuring the laser microdissection system, a laser beam is adjusted to have specific characteristics that determine how the laser beam interacts with a sample. For example, the laser beam produces a cut having a specific cut width. It has been recognized that the settings used to configure the laser microdissection system are specific to an objective lens used for generating the laser beam. Some characteristics, for example a central wavelength of the laser beam, do not depend on the objective lens used for generating the laser beam. However, other characteristics of the laser beam are influenced by the objective lens, for example a power density of the laser beam at the focal point. These characteristics will be different for different objective lenses when the same settings are used. In order to have the laser beam interact with the sample in the same way, different settings need to be used with different objective lenses. For example, different settings are used to cut a thin brain section using an objective lens having a 10x magnification than a 63x magnification, as these different objective lenses are used to focus the laser beam for cutting. However, this makes it necessary to first find the right settings for each objective lens by trial and error in order to successfully cut the same sample using different objective lenses. This process is time consuming.

The proposed controller addresses the issue of having to find the right settings for each objective lens by providing a tool that enables a user to transfer settings from one objective lens to another.

The first laser beam generated according to the first settings by the laser microdissection system using the first objective lens has the at least one characteristic that determines how the first laser beam interacts with the sample. Based on the user determined first settings the controller automatically generates the second settings such, that the at least one characteristic is essentially the same for the first laser beam and for the second laser beam generated according to the second settings by the laser microdissection system using the second objective lens, which differs from the first objective lens in at least one optical property. For example, the diameter of the first laser beam and the second laser beam at the focal point is the same despite the first objective lens and the second objective lens having different magnifications. This enables the user to cut the sample with cut width using the first objective lens and the second objective lens without having to determine the correct settings by trial and error first.

The first settings determine properties and behavior of the first laser beam before the laser beam is influenced by the first objective lens. Likewise, the second settings determine properties and behavior of the second laser beam before the laser beam is influenced by the second objective lens. The controller determines the second settings from the first settings in such a way that the influence of the second objective lens is taken into account and the first laser beam and the second laser beam interact with the sample in the same way. This ensures that the first laser beam and the second laser beam interact with the sample in the same way, without the user having to take manual action, for example without having to determine the correct settings for the second objective lens manually.

The at least one characteristic is influenced by the first objective lens and the second objective lens. For example, the at least one characteristic is a power density at the focal point, which depends, for example, on the magnification of the objective lens used. Further examples of the at least one characteristic are given in the following description. In this document it is assumed that neither the first objective lens nor the second objective lens influences spectral properties of the first laser beam or the second laser beam, respectively, for example a central wavelength. Accordingly, the at least one characteristic is not a spectral property, in particular not a central wavelength. It is further assumed in this document that neither the first objective lens nor the second objective lens influences a pulse width or a number of pulses per time unit of the first laser beam or the second laser beam, respectively, if the respective laser beam is a pulsed laser beam. Accordingly, the at least one characteristic is not the pulse width nor the number of pulses per time unit.

The first settings are determined by the controller based on the user input. In some embodiments, the controller may be configured to receive the first settings as the user input directly from the user. The controller may also be configured to receive an instruction to load the first settings from a memory of the controller or from a remote memory element as the user input.

The controller may comprise at least one processor and at least one memory element. The controller may also comprise an interface to connect to a remote memory element in addition or as an alternative to the local memory element.

In an embodiment, the at least one characteristic includes at least one of the following parameters: a power density, a power density at the focal point, a beam width at the focal point, a beam divergence, and a speed with which the focal point is moved over a sample. The power density of a laser beam as well as its beam width determine, for example, the width of a cut made with said laser beam. The beam width may be the Rayleigh beamwidth at the focal point or the full width at half maximum, for example.

Other definitions of the beam with may be used as well. The speed with which the focal point of a laser beam is moved over the sample determines how much power is used to cut the sample, and thus how much damage is potentially done to the sample. The beam divergence of a laser beam determines, among other things, the angle of a cut made with said laser beam. Thus, all parameters have a significant impact on how a laser beam interacts with the sample.

In another embodiment, the first settings and the second settings comprise at least one of the following parameters of the laser microdissection system: a speed, a power, a frequency, a pulse width, a UV-offset, a head current, and an aperture. The speed may be a speed of a scanning device, determining the speed with which the focal point of a laser beam generated by the laser microdissection system is moved over the sample. The power may be a power output of a laser light source, determining a power density of a laser beam generated by the laser microdissection system is moved over the sample. The head current is the power applied to a laser head of a laser light source and determines the power output of said laser light source. The frequency and the pulse width refer to properties of a pulsed laser beam and determine how much power is used to cut the sample, for example. The frequency and pulse width of the pulsed laser beam together with the current magnification also determine the number of pulses per µm of a cut made with the laser beam on the sample. The UV-offset may be used to align the focal point of a laser beam comprising light in the UV spectrum with a visual focus of an optical system of the laser microdissection system. The aperture may be controlled to adjust the beam width and/or beam divergence of a laser beam. Thus, all aforementioned parameters of the laser microdissection system may be controlled to directly influence the at least one characteristic.

In another embodiment, the controller is configured to control at least one of the following elements of the laser microdissection system to configure the laser micro dissection system based on the second settings: a laser light source, an optical system, and a scanning unit. The controller may the control laser light source to determine the power, the head current, the frequency, and/or the pulse width. The controller may control the optical system to determine the aperture and/or the UV-offset. The controller may control the scanning unit to determine the speed, for example the speed with which the focal point of a laser beam is moved over the sample. Thus, by controlling at least one of the aforementioned elements of the laser microdissection system, the controller can influence the at least one characteristic.

In another embodiment, the controller is configured to determine the second settings using a database, the database comprising different predefined settings for the laser microdissection system using different objective lenses. The database may also comprise settings for different sample types and/or membranes used to mount the sample. The database aids the controller in determining the second settings. In some cases, the controller may be able to use one of the predefined settings stored in the database as the second settings. In other cases, the controller may need to interpolate between two or more predefined settings to determine the second settings. The database may be stored locally on a memory element of the controller or remotely on a remote memory element. In some embodiments, the predefined settings may be determined in advance factory-side. The controller may also be configured to save the first settings input by a user and/or the second settings generated by the controller to the database. In such an embodiment, the database grows, thereby providing an ever-expanding set of predefined settings for the controller to determine second settings from.

In another embodiment, the controller is configured to determine the second settings using at least one known relationship between at least one parameter of the laser microdissection system, the at least one characteristic, and at least one optical property of the first objective lens and the second objective lens. The at least one known relationship may be stored locally on a memory element of the controller or remotely on a remote memory element, for example in the form of a table or at least one mathematical expression. The at least one known relationship may be a simple relationship between one parameter of the laser microdissection system, one characteristic, and one optical property. For example, the power density of a laser beam at the focal point may depend in first approximation only on the power of the laser light source used to generate said laser beam and the magnification of an objective lens used to focus said laser beam. The at least one known relationship may also be much more complicated, involving non-linear dependencies between multiple parameters of the laser microdissection system, multiple optical properties, and the at least one characteristic. Based on the at least one known relationship the controller can more robustly determine the second settings.

In another embodiment, the controller is configured to determine the second settings using machine learning. In such an embodiment, the controller employs a machine learning model to determine the second settings, such as a neuronal network or deep learning methods, for example. The machine learning model may be trained using the database comprising different predefined settings for the laser microdissection system using different objective lenses as training data, for example. Machine learning models are particularly good at discovering hidden relationships between data points, which may not be apparent through traditional analysis. Therefore, they are well-suited for identifying even a complex relationship between multiple parameters of the laser microdissection system, the at least one characteristic, and at least one optical property of the first objective lens and the second objective lens, greatly aiding the controller's ability to determine the second settings.

In another embodiment, the controller is configured to output the second settings to a user. In some embodiments, the controller may be configured to output the second settings via a control device used to control the laser microdissection system, such as a PC, and/or via an output unit of the laser microdissection system, for example a display. The controller may present the second settings as suggestion to the user, allowing the user to verify the second settings themselves before continuing. The user may want to make adjustments to the second settings themselves. Therefore, in some embodiments, the controller is configured to receive a second user input corresponding to adjustments to the second settings, to generate third settings based on the adjustments, and to configure the laser micro dissection system based on the third settings. Allowing the user to verify and/or modify the second settings themselves greatly increases usability.

The invention also relates to a laser microdissection system, comprising at least one laser light source configured to generate a laser beam, an optical system configured to guide the generated laser beam along a beam path, an objective lens exchange unit configured to selectively arrange the first objective lens or the second objective lens into the beam path, and the controller described above.

The generated laser beam may be the first laser beam or the second laser beam depending on the settings and objective lens used. The laser microdissection system has the same advantages as the controller described above. In particular, the laser microdissection system may be supplemented with the features described in this document in connection with the controller. Furthermore, the controller described above may be supplemented with the features described in this document in connection with the laser microdissection system.

In an embodiment, the laser microdissection system comprises a scanning unit configured to move the generated laser beam within a field of view of the objective lens currently arranged in the beam path. In such an embodiment, it is possible to leave the sample stationary, and to move the generated laser beam over the sample with minimal effort using the scanning unit. This reduces the number of moving parts of the laser microdissection unit, and thus increases the precision with which the dissectates can be separated from the sample. In some embodiments, the scanning unit may be controllable to control the speed at which the generated laser beam is moved within a field of view of the objective lens currently arranged in the beam path.

This directly influences the speed at which the generated laser beam is moved over the sample, for example during cutting.

In another embodiment, the scanning unit comprises two prisms which are arranged rotatably around an optical axis between the laser light source and the objective lens currently arranged in the beam path. The optical axis here is the optical axis of the objective lens currently arranged in the beam path or extension thereof, for example via a beam splitter. Each of the prisms deflects the laser depending on the rotation of the prism. The beam deflection caused by each of the prisms add up vectorially. Thus, by rotating the two prisms, the generated laser beam can be moved inside the field of view of the objective lens. In particular, the rotation of the prisms also causes a change of the beam offset at the output of the scanning unit. This beam offset compensates for the lateral deflection of the generated laser beam, which is otherwise generated in the plane of the objective pupil. As a result, the generated laser beam always passes through the pupil of the objective lens currently arranged in the beam path regardless of the deflection angle.

In some embodiments, the scanning unit may also comprise at least one of a scanning mirror device and a spatial light modulator, such as a digital mirror device. The scanning mirror device and the spatial light modulator may each be configured to achieve at least a comparable functionality compared to the scanning unit comprising the two prisms.

In another embodiment, the laser microdissection system comprises a sample positioning unit configured to move the sample relative to an optical axis of an objective lens currently arranged in the beam path. The sample positioning unit may comprise a movable microscope stage, for example an x-y stage. The sample positioning unit makes it possible to position the sample within the field of view of the objective lens. If the generated laser beam is kept stationary, the sample may be moved using the sample positioning unit in order to cut the dissectate in a table saw like manner.

In another embodiment, the laser light source comprises at least one pulsed laser. The pulsed laser generates pulsed laser light comprising a series of laser light pulses interrupted by intervals in which no laser light is emitted. The duration of the intervals in which no laser light is emitted may be adjustable. A laser beam generated from such pulsed laser light may be used to cut the sample in a way that is non-damaging to the remaining sample. Further, the at least one pulsed laser may be controlled to generate short laser pulses. Such short laser pulses may be formed into a laser beam that is defocused with respect to the sample. Such a laser beam may be used to tear the dissectate from the sample using the radiation pressure exerted by said laser beam on the sample.

In another embodiment, the laser light source comprises at least one UV-laser-light source. The UV-laser-light source is configured to generate UV-laser-light from which the generated laser beam is formed. UV-laser-light has a short wavelength, which enables high precision cuts and reduces the likelihood of heat diffusion, thereby minimizing damage to areas adjacent to the dissectate.

The invention further relates to a method for laser microdissection. The method comprises at least the following steps: a) Receiving first settings for a laser microdissection system used with a first objective lens. b) Generating second settings for the laser microdissection system used with a second objective lens based on the first settings. c) Configuring the laser micro dissection system based on the second settings. At least one characteristic of a first laser beam generated according to the first settings by the laser microdissection system used with the first objective lens is the same for a second laser beam generated according to the second settings by the laser microdissection system used with the second objective lens. The at least one characteristic is influenced by the first objective lens when the laser microdissection system is used with the first objective lens and influenced by the second objective lens when the laser microdissection system is used with the second objective lens.

The method has the same advantages as the controller and the laser microdissection system described above. In particular, the method may be supplemented with the features described in this document in connection with the controller and/or the laser microdissection system. Furthermore, the controller and the laser microdissection system described above may each be supplemented with the features described in this document in connection with the method.

### Short Description of the Figures

Hereinafter, embodiments are described referring to the drawings, wherein:
- Figure 1: is a schematic view of a laser microdissection system according to an embodiment; and
- Figure 2: is a flowchart of a method for laser microdissection according to an embodiment.

### Detailed Description of the Figures

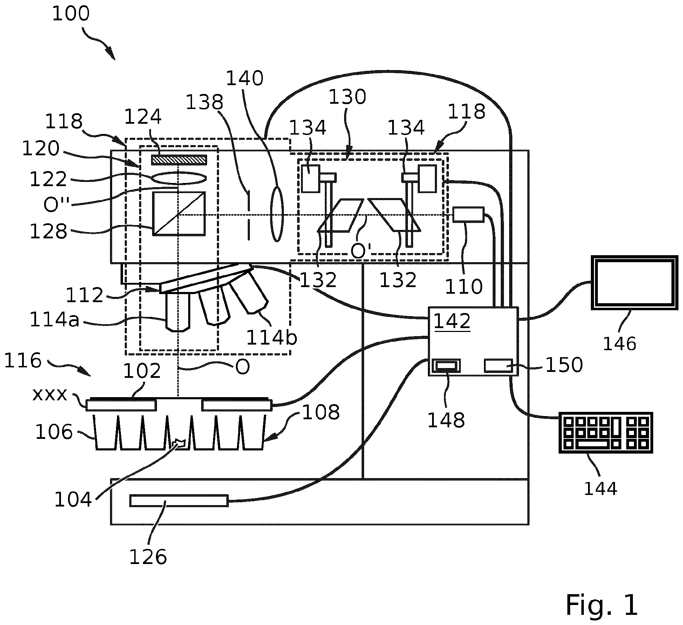

Figure 1 is a schematic view of a laser microdissection system 100 according to an embodiment. The laser microdissection system 100 is configured to remove small portions of a sample 102 using a laser beam. The removed portions will be called dissectates 104 in the following. The sample 102 may comprise a specimen, for example a biological specimen, such as a tissue section, arranged on a carrier, for example a membrane on a frame. For example, specific cells, cell clusters or other microscopic features of the sample 102 may be separated from the sample 102 and collected as the dissectates 104.

In the embodiment shown in Figure 1, the dissectates 104 are collected in wells 106 of a collection arrangement 108 arranged below the sample 102. The collection arrangement 108 is exemplary shown as a multiwell plate. The wells 106 of the collection arrangement 108 may also be formed by PCR-tubes that may be arranged in a frame to facilitate easy handling, by one or more Petri-dishes, or by similarly suited vessels. The collection arrangement 108 and/or individual wells 106 may be removable, allowing the dissectates 104 to be further processed.

The laser microdissection system 100 comprises a laser light source 110 configured to generate a laser beam. Using the laser beam the laser microdissection system 100 separates the dissectates 104 from the sample 102. For example, the laser microdissection system 100 may cut the dissectates 104 from the sample 102 using a focused beam or tear the dissectates 104 from the sample 102 using a defocused beam. The laser light source 110 may comprise one or more pulsed lasers for generating pulsed laser light from which the laser beam is formed.

The laser microdissection system 100 also comprises an objective lens exchange unit 112, mounting at least a first objective lens 114a and a second objective lens 114b, which differ in at least one optical property, for example magnification. In Figure 1, the objective lens exchange unit 112 is exemplary formed as an objective nosepiece, also called a turret or a revolving nosepiece. The first objective lens 114a and the second objective lens 114b mounted by the objective lens exchange unit 112 can be alternately pivoted into an optical axis O of the laser microdissection system 100. This allows a user to select either the first objective lens 114a or the second objective lens 114b. The selected objective lens 114a, 114b arranged in the optical axis O. Thus, the objective lens 114a, 114b currently arranged in the optical axis O will also be called the currently selected objective lens 114a, 114b. The currently selected objective lens 114a, 114b is, for example, used to focus the laser beam generated by the laser light unit into a sample space 116 in which the sample 102 is arranged. In the embodiment shown in Figure 1, the objective lens exchange unit 112 is configured to be fixed with respect to the body of the laser microdissection system 100. However, in another embodiment the objective lens exchange unit 112 may be moveable along the optical axis O of the laser microdissection system 100, i.e. the z-direction, in order to adjust the position of the focal plane of the currently selected objective lens 114a, 114b relative to the sample 102 and/or the collection arrangement 108.

The laser microdissection system 100 also comprises an optical system 118 configured to guide the laser beam generated by the laser light source 110 along a beam path O, O'. In the embodiment shown in Figure 1, the optical system 118 comprises an optical detection system 120 for capturing images of the sample 102. The optical detection system 120 comprises the currently selected objective lens 114a, 114b, a tube lens 122, and a detector 124. Further optical elements, such as lenses, filters, and apertures, may be part of the optical detection system 120. The currently selected objective lens 114a, 114b is directed at the sample space 116 and focusses the laser beam generated by the laser light source 110 into the sample space 116, for example on the sample 102. The currently selected objective lens 114a, 114b is further configured to receive detection light from the sample 102. The detection light is then directed by the currently selected objective lens 114a, 114b lens towards the detector 124 via the tube lens 122. The detector 124 is configured to generate the images of the sample 102 from the detection light.

In the embodiment shown in Figure 1, the laser microdissection system 100 also comprises an illumination system 126 configured to illuminate the sample 102. The illumination system 126 is exemplary arranged below the sample 102. The illumination system 126 may also be arranged above the sample 102 and be configured for incident light illumination. The optical system 118 may further be configured to illuminate the sample 102 via the currently selected objective lens 114a, 114b.

In the present embodiment, a beam splitter 128 is arranged between the objective lens and the tube lens 122. The beam splitter 128 is configured to direct the detection light towards the detector 124 via the tube lens 122. The beam splitter 128 may be a dichroic beam splitter, for example. The beam splitter 128 splits the beam path O originating at the sample 102 into two branches O', O", one branch O' extending to the laser light source 110 and another branch O" extending towards the detector 124. In the present embodiment, the laser beam is directed into the currently selected objective lens 114a, 114b via the beam splitter 128. Thereby, the beam splitter 128 allows the currently selected objective lens 114a, 114b to be used for both imaging and separating the dissectates 104.

In order to move the laser beam in the sample space 116, the laser microdissection system 100 according to the present emodiment comprises a scanning unit 130. The scanning unit 130 is exemplary arranged as part of the optical system 118 between the laser light source 110 and the currently selected objective lens 114a, 114b. The scanning unit 130 exemplary comprises two prisms 132 arranged in the beam path between the laser light source 110 and the beam splitter 128. The two prisms 132 are arranged rotatable around the optical axis O' of said beam path and configured to deflect the laser beam depending on their rotation. Thus, by rotating the two prisms 132, the laser beam can be moved relative to the sample 102 inside the field of view of the currently selected objective lens 114a, 114b. The scanning unit 130 further comprises a drive unit 134 for each of the two prisms 132. The two drive units 134 are configured to rotate the prisms 132 independently of each other.

In the embodiment according to Figure 1, the optical system 118 exemplary also comprises an aperture 138 arranged between the beam splitter 128 and the scanning unit 130. The aperture 138 is configured to be adjustable for setting the beam diameter of the laser light beam. The optical system 118 exemplary further comprises UV-offset optics 140, which is configured to be adjustable for setting a UV-offset of the optical system 118, i.e. to align the focal point of the laser beam with a visual focus of the optical system 118, which is the point focused on the detector 124.

In the present embodiment, the laser microdissection system 100 also comprises a sample positioning unit 136 arranged in the sample space 116 on which the sample 102 is arranged. In the embodiment shown in Figure 1, the sample positioning unit 136 is exemplary formed as a microscope stage having an opening, which allows the dissectates 104 to fall into the wells 106 of the collection arrangement 108 under the influence of gravity. The sample positioning unit 136 is configured to move the sample 102 relative to the optical axis O of the objective lens. In particular, the sample positioning unit 136 is configured to move the sample 102 in a plane perpendicular to the optical axis O of the objective lens, i.e. in the x- and y-directions, and may also be configured to move the sample 102 in the direction of the optical axis O, i.e. in the z-direction. By means of the sample positioning unit 136, the sample 102 can be automatically and precisely positioned in a field of view of the currently selected objective lens 114a, 114b. Thereby, a specific area of the sample 102 from which one or more dissectates 104 are to be removed can be brought into the field of view.

The laser microdissection system 100 further comprises a controller 142, an input unit 144, and an output unit 146. The controller 142 is configured to receive a user input via the input unit 144, and to display visual information to the user via the output unit 146. The input unit 144 is exemplary shown to comprise a keyboard. However, the input unit 144 may also comprise a computer mouse, a stylus for use with a touch screen, or other suitable input devices. The output unit 146 is exemplary shown as a monitor. The input unit 144 and the output unit 146 may also be a single element, for example a touch screen. The controller 142 further comprises an external interface 148, and a memory element 150. The controller 142 is configured to receive data via the external interface 148. The external interface 148 may comprise a connector for a storage device, for example a flash drive, and/or a connection to a computer network, such as a local area network or the internet enabling the controller 142 to access a remote memory element, for example.

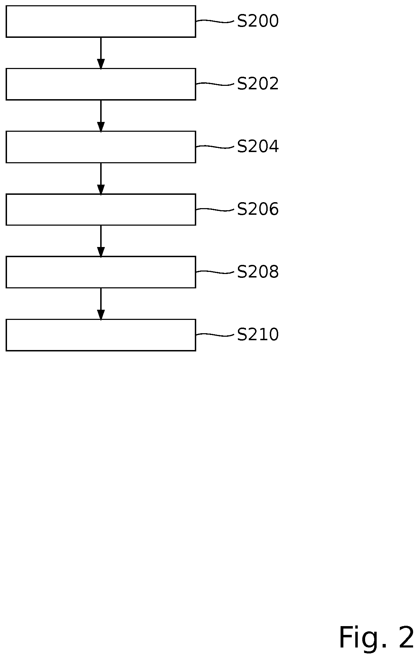

Further, the controller 142 is configured to perform at least some steps of a method for laser microdissection. In order to perform the method, the controller 142 may be configured to control at least one of the following elements: the laser light source 110, the objective lens exchange unit 112, the optical system 118, the illumination system 126, the scanning unit 130, and the sample positioning unit 136. The method will be described in more detail below with reference to Figure 2.

Figure 2 is a flowchart of the method for laser microdissection according to an embodiment. In the following, the method is described with reference to the laser microdissection system 100 according to Figure 1 as an example only. The method may be performed, at least in part, by the controller 142 of the laser microdissection system 100 according to Figure 1, for example.

In step S200 the method is started. In step S202, first settings are received. The first settings define how the laser microdissection system 100 generates a first laser beam when the currently selected objective lens 114a, 114b is the first objective lens 114a. The first settings may be received by the controller 142, for example. In some embodiments, the first settings are received as a user input. For example, the user inputs the first settings using the input device. In some embodiments, the first settings may also be received as the result of a user input. For example, the user issues a command to load the first settings from the memory element 150 or from an external source via the external interface 148.

In step S204 second settings are generated based on the first settings, for example by the controller 142. The second settings define how the laser microdissection system 100 generates a second laser beam when the currently selected objective lens 114a, 114b is the second objective lens 114b. The second settings are generated such that at least one characteristic of the first laser beam is the same for the second laser beam despite the first objective lens 114a and the second objective lens 114b having different optical properties. The at least one characteristic is influenced by the first objective lens 114a when the first objective lens 114a is the currently selected objective lens 114a, 114b and influenced by the second objective lens 114b when the second objective lens 114b is the currently selected objective lens 114a, 114b. In an example, the second settings may be generated such that a power density at the focal point is the same for the first laser beam, which is generated using the first objective lens 114a, and the second laser beam, which is generated using the second objective lens 114b. In this example, a known linear relationship between a power setting of the laser light source 110, the magnification of the currently selected objective lens 114a, 114b, and the power density at the focal point may be used to determine the second settings. In another example, the second settings are generated such that the first laser beam and the second laser beam are moved at the same speed over the sample 102 despite the first objective lens 114a and the second objective lens 114b having different magnifications.

In some embodiments, a database may be used to generate the second settings, the database comprising a number of predefined settings for different objective lenses. For example, the second settings may be retrieved from the database, if fitting predefined settings already exist in the database. In other cases, the second settings may be determined by interpolating between two or more predefined settings. The first settings and the second settings may be stored in the database for future use. In some embodiments, the second settings may be determined using a machine learning model that has been trained on a number of predefined settings.

In the optional step S206, the second settings are displayed to the user, for example via the output unit 146. The user may verify the second settings, for example by issuing a corresponding command using the input unit 144. In some embodiments, the user may also alter the second settings before the method is continued in step S208, for example using the input unit 144. Step S206 may be performed by the controller 142.

In step S208 the laser micro dissection system is configured based on the second settings, for example by the controller 142. In some embodiments, the laser light source 110 may be controlled, to determine a power of the laser light source 110 based on the second settings. If the laser light source 110 comprises at least one pulsed laser, a frequency, and/or a pulse width may be set in step S208 based on the second settings. Likewise, the optical system 118 may be controlled to set the aperture 138 and/or the UV-offset optics 140. Further, the scanning unit 130 may be controlled to determine, for example, the speed with which the focal point of a laser beam is moved over the sample 102. The method is then ended in step S210.

Identical or similarly acting elements are designated with the same reference signs in all Figures. As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

### Reference signs

- 100: Laser microdissection system
- 102: Sample
- 104: Dissectate
- 106: Well
- 108: Collection arrangement
- 110: Laser light source
- 112: Objective lens exchange unit
- 114a, 114b: Objective lens
- 116: Sample space
- 118: Optical system
- 120: Optical detection system
- 122: Tube lens
- 124: Detector
- 126: Illumination system
- 128: Beam splitter
- 130: Scanning unit
- 132: Prism
- 134: Drive unit
- 136: Sample positioning unit
- 138: Aperture
- 140: UV-offset optics
- 142: Controller
- 144: Input unit
- 146: Output unit
- 148: External interface
- 150: Memory element

## Claims

1. A controller (142) for a laser microdissection system (100), the controller (142) being configured to
receive a user input corresponding to first settings for the laser microdissection system (100) used with a first objective lens (114a),
to generate second settings for the laser microdissection system (100) used with a second objective lens (114b) based on the first settings, and
to configure the laser micro dissection system based on the second settings,
wherein at least one characteristic of a first laser beam generated according to the first settings by the laser microdissection system (100) using the first objective lens (114a) is the same for a second laser beam generated according to the second settings by the laser microdissection system (100) using the second objective lens (114b), and
wherein the at least one characteristic is influenced by the first objective lens (114a) when the laser microdissection system (100) is used with the first objective lens (114a) and influenced by the second objective lens (114b) when the laser microdissection system (100) is used with the second objective lens (114b).

2. The controller (142) according to claim 1, wherein the at least one characteristic includes at least one of the following parameters: a power density, a power density at the focal point, a beam width at the focal point, a beam divergence, and a speed with which the focal point is moved over a sample (102).

3. The controller (142) according to claim 1 or 2, wherein the first settings and the second settings comprise at least one of the following parameters of the laser microdissection system (100): a speed, a power, a frequency, a pulse width, a UV-offset, a head current, and an aperture.

4. The controller (142) according to any one of the preceding claims, wherein the controller (142) is configured to control at least one of the following elements of the laser microdissection system (100) to configure the laser micro dissection system based on the second settings: a laser light source (110), an optical system (118), and a scanning unit (130).

5. The controller (142) according to any one of the preceding claims, wherein the controller (142) is configured to determine the second settings using a database, the database comprising different predefined settings for the laser microdissection system (100) using different objective lenses.

6. The controller (142) according to claim 5, wherein the controller (142) is configured to save the first settings input by a user and/or the second settings generated by the controller (142) to the database.

7. The controller (142) according to any one of the preceding claims, wherein the controller (142) is configured to determine the second settings using at least one known relationship between at least one parameter of the laser microdissection system (100), the at least one characteristic, and at least one optical property of the first objective lens (114a) and the second objective lens (114b).

8. The controller (142) according to any one of the preceding claims, wherein the controller (142) is configured to determine the second settings using machine learning.

9. The controller (142) according to any one of the preceding claims, wherein the controller (142) is configured to output the second settings to a user.

10. The controller (142) according to claim 9, wherein the controller (142) is configured to receive a second user input corresponding to adjustments to the second settings, to generate third settings based on the adjustments, and to configure the laser micro dissection system based on the third settings.

11. A laser microdissection system (100), comprising at least one laser light source (110) configured to generate a laser beam, an optical system (118) configured to guide the generated laser beam along a beam path (O, O'), an objective lens exchange unit (112) configured to selectively arrange the first objective lens (114a) or the second objective lens (114b) into the beam path (O), and the controller (142) according to any one of the preceding claims.

12. The laser microdissection system (100) according to claim 11, comprising a scanning unit (130) configured to move the generated laser beam within a field of view of the objective lens (114a, 114b) currently arranged in the beam path (O).

13. The laser microdissection system (100) according to claim 11 or 12, comprising a sample positioning unit (136) configured to move a sample (102) relative to an optical axis of the objective lens (114a, 114b) currently arranged in the beam path (O).

14. The laser microdissection system (100) according to any one of the claims 11 to 13, wherein the laser light source (110) comprises at least one pulsed laser.

15. A method for laser microdissection, comprising at least the following steps:
a) receiving first settings for a laser microdissection system (100) used with a first objective lens (114a);
b) generating second settings for the laser microdissection system (100) used with a second objective lens (114b) based on the first settings; and
c) configuring the laser micro dissection system based on the second settings;
wherein at least one characteristic of a first laser beam generated according to the first settings by the laser microdissection system (100) used with the first objective lens (114a) is the same for a second laser beam generated according to the second settings by the laser microdissection system (100) used with the second objective lens (114b), and
wherein the at least one characteristic is influenced by the first objective lens (114a) when the laser microdissection system (100) is used with the first objective lens (114a) and influenced by the second objective lens (114b) when the laser microdissection system (100) is used with the second objective lens (114b).
